Europäisches Patentamt

European Patent Office

Office européen des brevets

(11) Publication number: **0 201 653**
**B1**

(12) **EUROPEAN PATENT SPECIFICATION**

(45) Date of publication of patent specification: **31.01.90**

(51) Int. Cl.⁵: **B 29 D 30/30, B 65 H 23/188**

(21) Application number: **85730060.2**

(22) Date of filing: **15.04.85**

(54) Controller for winding unvulcanized rubber sheet.

| | |
|---|---|
| (43) Date of publication of application:<br>**20.11.86 Bulletin 86/47** | (73) Proprietor: **MITSUBISHI JUKOGYO KABUSHIKI KAISHA**<br>**5-1, Marunouchi 2-chome Chiyoda-ku**<br>**Tokyo 100 (JP)** |
| (45) Publication of the grant of the patent:<br>**31.01.90 Bulletin 90/05** | (73) Proprietor: **Bando Chemical Industries, Ltd.**<br>**15-go, 2-ban, 3-chome Meiwa-dori**<br>**Hyogo-ku Kobe Hyogo (JP)** |
| (84) Designated Contracting States:<br>**DE IT NL** | (72) Inventor: **Kubo, Masayoshi Nagasaki Shipyard & Engine Works**<br>**Mitsubishi Jukogyo K.K. 1-1, Akunoura-machi**<br>**Nagasaki City Nagasaki Pref. (JP)**<br>Inventor: **Tokunaga, Kenji Nagasaki Shipyard & Engine Works**<br>**Mitsubishi Jukogyo K.K. 1-1, Akunoura-machi**<br>**Nagasaki City Nagasaki Pref. (JP)**<br>Inventor: **Katayama, Hideaki Nagasaki Shipyard & Engine Works**<br>**Mitsubishi Jukogyo K.K. 1-1, Akunoura-machi**<br>**Nagasaki City Nagasaki Pref. (JP)**<br>Inventor: **Yamanaka, Megumi**<br>**208-28, Ohkubo Kumatori-cho**<br>**Sennan-gun Osaka (JP)**<br>Inventor: **Inada, Hisanobu**<br>**1604, Okada**<br>**Sennan City Osaka (JP)** |
| (56) References cited:<br>**FR-A-2 216 101**<br>**GB-A-2 127 342**<br>**US-A-4 155 789**<br>**US-A-4 474 338** | |

Courier Press, Leamington Spa, England.

**EP 0 201 653 B1**

(74) Representative: **Meissner, Peter E., Dipl.-Ing. et al**
**Meissner & Meissner Patentanwälte**
**Herbertstrasse 22**
**D-1000 Berlin 33 Grunewald (DE)**

# EP 0 201 653 B1

**Description**

## Background of the invention
### (i) Field of the invention

The present invention relates to a controller for winding an unvulcanized rubber sheet, and more particularly to a controller for winding an unvulcanized rubber sheet applicable to a machine for molding tires and transmitting belts such as V belts, flat belts and serrated toothed belts.

### (ii) Description of the prior art

Heretofore, when an unvulcanized rubber sheet or an unvulcanized rubber sheet containing cloth, cords or short fibers (hereinafter referred to as an unvulcanized rubber sheet in general) is wound on a drum having a cylindrical outer periphery, an operator draws out the unvulcanized rubber sheet through a ply servicer to adhere an end of the rubber sheet to the surface of the drum, rotates the drum by a predetermined quantity to wind the rubber sheet and then cuts the rubber sheet. Accordingly, there are drawbacks that much labor is required and the producitivity and the quality thereof are greatly dependent on a skill of the operator.

In order to remove the drawbacks and improve the operation, there have been proposed many manners such as a manner for winding an unvulcanized rubber sheet previously cut in a predetermined length on a drum and a manner disclosed in Japanese Patent Application Laid-open No. 38144/83. However, in any manners, since the drum having a same peripheral length is used for a given period of time, it is necessary to change the setting condition such as the length of winding the rubber sheet on the drum when the peripheral length of the drum is varied. Accordingly, when the peripheral length of the drum is frequently changed as in the molding of the transmitting belt which is a product having various types but manufactured in a small quantity, the actual rate of operation of facilities and operators is remarkably reduced and the rate of occurrence of defective products due to the mistake of setting condition is increased.

US—A—4,155,789 discloses synchronizing control of the peripheral velocities of the roller die and the tire, such method consists in detecting the peripheral velocity of the roller die by the shaft encorder and permitting the peripheral velocity of the tire to follow that of the roller die by combining the control-processor, DC motor controller and follower encorder, thereby attempting the synchronization of both.

US—A—4,474,338 describes calculating module and the possibility of calculating the ratio of peripheral velocities of the feed conveyor unit and tire building drum from the length of tire-material strip and the peripheral length of the tire building drum but it does not describe anything at all about the step of exchanging drums of different peripheral velocities, namely, it does not suggest anything at all about improvements in a change of the setup. Next, concerning the synchronization of the feed conveyor unit and the drum, said reference contemplates to detect the peripheral velocity of the drum by means of the pulse signal generator connected to the reduction gear unit for driving the drum, and for synchronization therewith, to control the stepper motor for driving the feed conveyor unit.

FR—A—2,216,101 last discloses a method of synchronizing control. The peripheral velocity of the wheel is detected by the pulse generators connected to the wheel drive gear for purposes of control such that the peripheral velocity of the drum can synchronize with that of said wheel.

## Summary of the invention

The present invention is to be proposed in view of the above drawbacks in the prior art. An object of the present invention is to resolve the above drawbacks in the prior art and provide a controller for winding an unvulcanized rubber sheet capable of always attaining the correct winding operation of the rubber sheet automatically against the variation of the setting condition with the high working rate and preventing the occurrence of mistake of the operator.

Accordingly, the present invention resides in a controller for winding an unvulcanized rubber sheet comprising a cylindrical drum (1) rotated by a motor (15) for winding said unvulcanized rubber sheet, at least a feeding conveyor (6 or 7) driven by a motor (44 or 45) for feeding said unvulcanized rubber sheet to said drum, means (18, 19, 22) for measuring the outer peripheral length of said drum before winding said unvulcanized rubber sheet (including already wound rubber sheet), a data processor (48) for calculating the amount of winding rotation of said drum for winding said unvulcanized rubber sheet on said drum on the basis of previously input data and said measured outer peripheral length of said drum and also calculating, a dividing ratio for said drum and a dividing ratio for said conveyor respectively so as to synchronize the peripheral velocities of said drum and said feeding conveyor and to output said dividing ratios and a sequence control unit (49) for controlling the sequence of operation of each of the aforesaid motors to be driven on the basis of output of said data processor.

Since the above construction is provided in the present invention, the following effects are achieved.

According to the present invention, even if the setting conditions containing the outer peripheral length of the drum, for example, are varied for each operating cycle, the high working rate can be maintained by the automatic control and the correct winding operation can be always attained. Therefore, the occurrence of the operating error by the operator can be effectively prevented.

Brief description of the drawings

Figure 1 is a cross sectional side view of a portion showing the configuration of an embodiment of the present invention;

Figure 2 shows a drive mechanism for winding the unvulcanized rubber sheet as viewed from the front side in Figure 1;

Figures 3(A), (B) and (C) show the winding procedure of the unvulcanized rubber sheet according to an embodiment of the present invention; and

Figure 4 is a block diagram showing a necessary part of a controller according to an embodiment of the present invention.

Detailed description of the preferred embodiment

An embodiment of the present invention will now be described in detail with reference to the accompanying drawings.

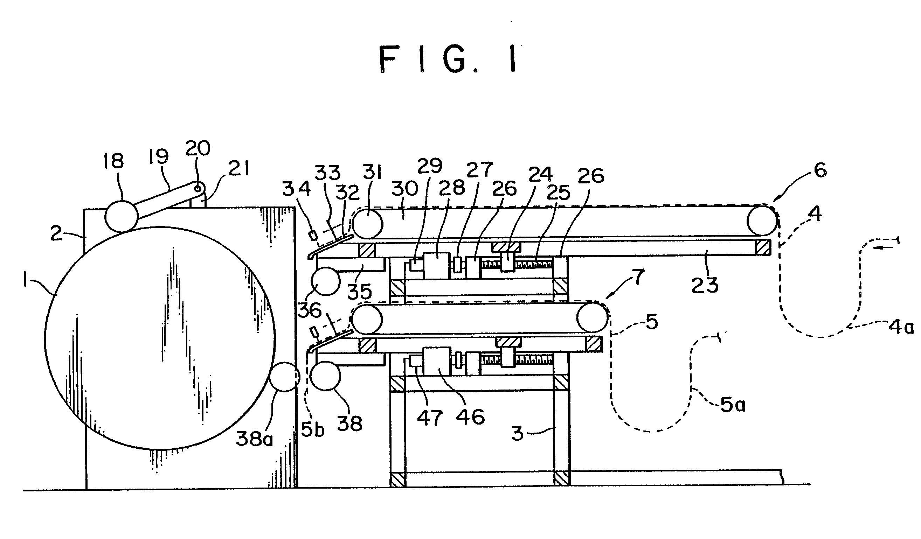

Referring to Figures 1 to 4, numeral 1 denotes a drum having an actual outer periphery for the molding operation, 2 a head stock for rotatably supporting the drum 1 and including a drive unit for rotating the drum 1, 3 a fixed frame for a service, and 4 and 5 unvulcanized rubber sheets, respectively. Generally, a plurality of types of rubber sheets (two types of rubber sheets are shown) are provided and one or a plurality of types of the rubber sheets of them are wound on the drum 1 depending on a specification of a product, numerals 6 and 7 denote feeding units of the rubber sheets 4 and 5, respectively. In the figure, only two sets of feeding units are provided but can be increased or decreased if desired.

The head stock 2 comprises a head stock housing 10, a main shaft 8 which is rotatably supported to the head stock housing 10 through a bearing 9 and has one end of which the drum 1 is mounted detachably by means of known means and the other end on which a pulley 11 is fixedly mounted, a pulse motor 15 directly coupled to a reduction gear 14, a pulley 13 fixedly mounted on an output shaft of the reduction gear 14, a toothed belt 12 which is received on the pulley 11 and a proximity switch 16 of a high accuracy type which is fixedly mounted in the head stock housing 10 for detecting a projection 11a mounted on a peripheral side of the pulley 11.

A roller 18 for measuring the outer peripheral length of the material wound on the drum 1 is rotatably mounted on one end of a lever 19. A known pulse generator (hereinafter referred to as PG) 22 is coupled with a shaft of the roller 18 and the PG is to generate pulses corresponding to the rotational quantity of the roller 18. The other end of the lever 19 is fixedly mounted one end of a shaft 20 which is rotatably mounted on a bracket 21 fixed on the head stock housing 10. An air cylinder 17 not shown is coupled with the other end of the shaft 20 and the lever 19 is swung through the shaft 20 by the operation of the air cylinder 17.

Numeral 23 denotes a movable frame for the feeding unit 6, which is mounted on the fixed frame 3 slidably in the direction perpendicular to the axial core of the drum 1 by a known guide means not shown. A feed screw 25 meshing with an internal thread 24 fixedly mounted on the movable frame 23 has both ends which are rotatably mounted in bearings 26 fixed on the fixed frame 3 and is coupled with a geared motor 28 with a brake fixedly mounted on the frame 3 through a coupling 27. The movable frame 23 is moved in the direction perpendicular to the axial core of the drum 1 by operating the motor 28 and the movement quantity thereof is detected by the PG 29 mounted to the motor 28. Although not shown, there is also provided with a limit switch for preventing the over-stroke of the movable frame 23.

Numeral 30 denotes a belt conveyor for feeding the rubber sheet, 31 a drive roll thereof, 32 a chute fixedly mounted on the movable frame 23 and 33 a known cutter mounted on the movable frame 23 for cutting the rubber sheet with a predetermined angle in the moving direction of the rubber sheet. The cutter 33 includes a round knife, a knife heater or the like depending on the construction of the rubber sheet and includes a drive means or the like although not shown.

Numeral 34 denotes a photo-electric switch mounted on the movable frame 23 for detecting a cut end 4b of the rubber sheet 4.

Numeral 35 denotes a movable frame mounted on the frame 23 and moved slidably in the direction perpendicular to the axial core of the drum 1 by operation of the air cylinder 37 not shown. A sponge roller 36 for pressing the rubber sheet 4 on the drum 1 is rotatably mounted on the movable frame 35.

The drive roll 31 is rotatably supported by bearings 40 mounted in the movable frame 23. A toothed belt 42 is provided between a pulley 41 mounted on one shaft of the drive roll 31 and a pulley 43 mounted on an output shaft of a pulse motor 44 fixedly mounted on the movable frame 23. Thus, by operating the pulse motor 44, the drive roll 31 is rotated to feed the rubber sheet 4.

The feeding unit 7 has the same construction as the feeding unit 6 except that the length of the belt conveyor is different and therefore the description thereof will be omitted. Numeral 38 denotes a sponge roller identical with the roller 36 and which can be moved to a position 38a by operation of the air cylinder 39 not shown. Numeral 45 denotes a pulse motor for driving the belt conveyor, 46 a geared motor with a brake for moving a movable frame for the feeding unit 7 and 47 a PG for detecting the movement quantity of the movable frame.

Numeral 48 denotes a data processor which comprises a central processing unit (hereinafter referred to as CPU) for performing the data processing in accordance with a previously inputted program, a full keyboard for inputting data indicating the sequence of the molding operation, a Braun tube display unit (hereinafter referred to as CRT) for identifying the inputted data, a CRT interface for transmitting and receiving signals between the keyboard and the CRT and the CPU, a digital switch for inputting a material number of the rubber sheet supplied to the rubber sheet feeding unit not shown, a memory circuit containing a read-only-memory (ROM) and a random-access-memory (RAM) for storing the indication data and the like, and an input/output interface for transmitting and receiving signals between the CPU and the sequence circuit unit and the like. Further, it is convenient to add an external memory reading unit for reading the indication data from an external memory in which the indication data is stored previously and a printer for recording the resultant data of the molding operation. The keyboard, the CRT and the digital switch may be conveniently mounted in an operating control described later.

Numeral 49 denotes a sequence circuit unit for controlling the operation of each units and which utilizes a programmable controller (generally named a sequencer) in this embodiment. Numeral 50 denotes an operating control including an automatic/manual selector switch, a push-button switch for start and stop, an indicating lamp and the like. Numeral 51 denotes a counter for counting the pulses generated from the PG 22 during one rotation of the drum 1, that is, until the proximity switch 16 is operated next after the switch 16 is operated once. Numeral 53 denotes a pulse generator used to set the speed of rotation of the drum 1 at the time other than the winding time of the rubber sheet and including a device for setting the number of generated pulse per second. Numeral 52 denotes a digital switch for setting the rotation quantity of the drum 1 at the time other than the winding time.

Numeral 54 denotes a pulse generator which is utilized when the rubber sheet is wound on the drum and generates pulses at a predetermined P/S until the number of generated pulses reaches a value designated by the data processor 48.

Numerals 55 and 56 denote frequency dividers for dividing the pulse signals generated from the pulse generator 54 in accordance with a frequency dividing data signal produced from the data processor 48 so as to automatically set a ratio of peripheral velocities of the drum 1 and the feeding conveyor 30 and the feeding quantity of the rubber sheet. Numeral 57 denotes a digital switch for setting the feeding quantity of the rubber sheet by the feeding conveyor at the time other than when the rubber sheet is wound and, numeral 58 denotes a pulse generator for use with the digital switch 57 and including a P/S setting device.

Numeral 59 denotes a relay circuit unit for selecting the pulse signal of the pulse generator 53 or the frequency divider 55. Numeral 60 denotes a relay circuit unit for selecting a pulse signal of the pulse generator 58 or the frequency divider 56 and performing the control operation for selectively feeding the rubber sheet 4 or 5. Numeral 61 denotes a pulse motor driver responsive to the output pulse signal of the relay circuit unit 59 for driving a pulse motor 15 and numerals 62 and 63 denote pulse motor drivers responsive to the output pulse signal of the relay circuit unit 60 for driving pulse motors 44 and 45, respectively.

Numerals 64 and 65 denote AC motor control units for the geared motors 28 and 46 with AC brake, respectively, and including a comparison circuit for a stroke setting signal produced from the data processor and a position detection pulse signal produced from the PG 29 and 47.

Numeral 66 denotes a pneumatic control device for air cylinders 17, 37 and 39 and including a solenoid operated valve and a pressure reducing valve.

Further, the controller comprises a limit switch, a proximity switch, a photo-electric switch and the like for detecting the operating condition of the movable frames and the air cylinders and a driving circuit for the rubber sheet feeding device although not shown.

The present invention will now be described by way of example with reference to the formation of the V belt to which the present invention is applied.

Concerning all types of V belts which are planned to be formed by the present controller, the specification data including the type number V and the peripheral length L for each V belt, the material number Mn of the used rubber sheet, the thickness Mt of the rubber sheet and the number of wound layers Ml corresponding to the grade number M and the number D of the used drum, the material number Mn of rubber sheet supplied to the servicer, the supply location thereof P (the feeding device number) and mechanical data described later are inputted and stored in the data processor 48. Before starting the formation of the belt, the designation data including the formation order N, the type number V, the peripheral length L and the grade number M of the V belt to be formed in a predetermined time of period are inputted to the data processor 48 and the operating control 50 is then operated to start automatically.

The sequence circuit unit 49 then produces a data request signal to supply it to the data processor 48. When the data processor 48 identifies in response to the data request signal that the counter memory in the memory circuit is N, the CPU sleects the type number V, the peripheral length L and the grade number M of the V belt of the formation order N on the basis of the designation data in the memory circuit to select the specification data corresponding to the selected designation data and performs a next operation.

The forward stroke data signal for the feeding unit 6 and/or 7 is given by

$$X_1 = a_1 - b_1 \sqrt{(L+c_1)^2 - d_1^2}$$

where $a_1$, $b_1$, $c_1$ and $d_1$ are mechanical data which are calculated by the following equations and inputted previously (the data for the feeding units 6 and 7 are required to be calculated and inputted independently).

$$a_1 = k_1(S_1 - s_1), \quad b_1 = k_1/2\pi, \quad c_1 = 2\pi r, \quad d_1 = 2\pi h$$

$k_1$: the number of pulse trains generated by the PG's 29 and 47 when the feeding units 6 and 7 are moved a unit distance.

$S_1$: the horizontal distance between the center of the drum 1 when the feeding units 6 and 7 are in a wait position and the center of the sponge rolls 36 and 38 being in the wait position.

$s_1$: the proper pressing stroke of the sponge rolls 36 and 38.

r: the radius of the sponge rolls 36 and 38.

h: the difference in height between the center of the drum 1 and the center of the sponge rolls 36 and 38.

The results to be calculated by the following equation are previously set to the digital switch 57 as for the feeding units 6 and 7, respectively.

The feeding length of the rubber sheet 4 and/or 5 is given by

$$X_2 = k_2 (L_0 - S_2)$$

$k_2$: the number of output pulses supplied to the pulse motors 44 and 45 required to cause the feeding units 6 and 7 to feed the rubber sheets 4 and 5 a unit distance.

$L_0$: the length of the end 4b of the rubber sheet fed from the cutting position of the rubber sheet 4 by the cutter 33 before starting the winding operation (this length is previously inputted to the data processor 48 as a mechanical data).

$S_2$: the distance between the cutting position of the rubber sheet 4 by the cutter 33 and the detection position by the photo-electric switch 34.

The data processor 48 supplies the above calculated result $X_1$ to the AC motor control units 64 and 65 and supplies the signal of the position number P (for example 6) supplied with the rubber sheet having the used material number Mn to the sequence circuit unit 49. The sequence circuit unit 49 thus sends the start signal to the AC motor control unit (for example, the AC motor control unit 64) and starts the measurement of the peripheral length.

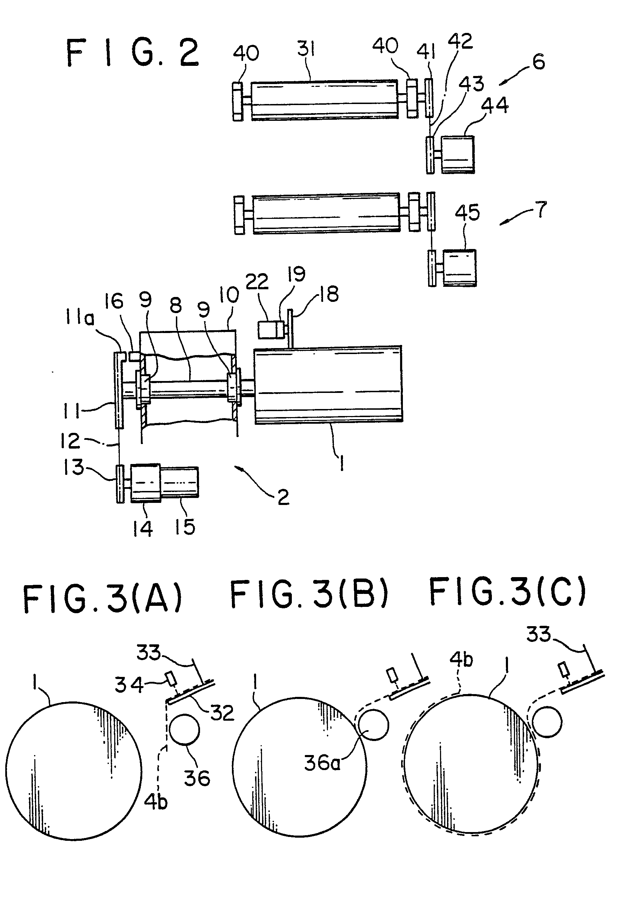

When the start command is supplied to the AC motor control unit 64, the feed screw 25 is rotated through the geared motor 28 with brake to move the feeding unit 6 forward (to approach the drum 1). When the number of the pulses generated by the PG 29 reaches the above value $X_1$, the forward movement of the feeding unit 6 is stopped and the stroke completion signal is supplied to the sequence circuit unit 49. Thus, the sequence circuit unit 49 causes the relay circuit unit 60 to select the pulse generator 58 and the pulse motor driver 62 and supplies the pulse generation command to the pulse generator 58 so that the feeding conveyor 30 is operated through the pulse motor 44 to feed the rubber sheet 4. When the number of pulses generated from the generator 58 after the end 4b of the rubber sheet 4 has been detected by the photo-electric switch 34 reaches the value $X_2$ preset to the digital switch 57 (Figure 3(A)), the feeding conveyor 30 is stopped and the pulse generator 58 supplies the feeding completion signal to the sequence circuit unit 49.

On the other hand, the peripheral length is measured during the above operation. The sequence circuit unit 49 first operates the air cylinder 17 through the pneumatic control device 66 to bring the peripheral length measuring roller 18 into contact with the surface of the drum 1 (or the surface of the rubber sheet wound on the drum). The relay circuit unit 59 is caused to select the pulse generator 53 to start the generation of pulses and the drum 1 is rotated through the pulse motor driver 61 and the pulse motor 15. When the proximity switch 16 operates, the counter 51 starts to count the pulses of the PG 22 and when the proximity switch 16 operates next, the counter 51 stops to count the pulses of the PG 22 and the resultant count signal $X_3$ is supplied to the data processor 48 with the count completion signal being supplied to the sequence circuit unit 49. The sequence circuit unit 49 stops the rotation of the drum 1 and returns the air cylinder 17 to its original position to terminate the measurement of the peripheral length.

The data processor 48 performs the following calculation on the basis of the measured peripheral length data signal $X_3$.

Measured peripheral length $L_n = a_3 X_3$

Frequency dividing ratio of drum $K_D = a_4/Z_D$

Frequency dividing ratio of conveyer $K_C = a_5/(L_{Di} \times Z_D)$

  $i = 1, 2, ...,$ winding order

$L_{D1} = L_n + \pi(M_{I1} \times M_{t1}) \times \alpha_1$

$L_{D2} = L_n + 2\pi(M_{I1} \times M_{t1}) + \pi(M_{I1} \times M_{t2}) \times \alpha_2$

Wound rotational quantity $X_4 = a_6 (M_{I1} - L_0/L_{EI})$

  $i = 1, 2, ...:$ winding order

$L_{E1} = L_n + 2\pi(M_{I1} \times M_{t1}) + \beta_1$

$L_{E2} = L_n + 2\pi(M_{I1} \times M_{t1}) + 2\pi(M_{I2} \times M_{t2}) + \beta_2$

where $\alpha_i$ and $\beta_i$ represent correction coefficients on the basis of the characteristics and the lap area of the rubber sheet, and $Z_D$ represents the speed of rotation (RPM) of the drum when the rubber sheet is wound. These data are previously inputted as the specification data. Further, the data $a_3$, $a_4$, $a_5$ and $a_6$ are the

mechanical data calculated by the following equations and previously inputted. It may be convenient to utilize the following equation of *a* instead of utilizing the equation.

$$a_3 = \pi d/k_3, \quad a_4 = 60 \ H/k_4, \quad a_5 = 60H/a_2, \quad a_6 = K_D \cdot k_4$$

d; diameter of the roller 18 for measuring the peripheral length
$k_3$: number of pulses generated by the PG 22 for one rotation of the roller 18
H: P/S of the pulse generator 54
$k_4$: number of pulses supplied to the pulse motor 15 required for one rotation of the drum 1

After the above calculation is completed, the signal $K_D$, Kc and $X_4$ are supplied to the frequency divider 55, 56 and the pulse generator 54, respectively, and the calculation completion signal is supplied to the sequence circuit unit 49. In accordance with the feeding completion signal and the calculation completion signal for the rubber sheet 4, the sequence circuit unit 49 causes the relay circuit unit 59 to select the frequency divider 55 and the relay circuit unit 60 to select the frequency divider 56 and the pulse motor drive. At the same time, the air cylinder 37 is operated through the pneumatic control circuit 66 to move the sponge roller 36 so that the end 4b of the rubber sheet 4 is pressed and adhered to the surface of the drum 1 (Figure 3(B)). Thereafter, the pulse generation command is supplied to the pulse generator 54 and the pulse motors 15 and 44 are driven in synchronism with each other through the frequency dividers 55 and 56, the relay circuit units 59 and 60, and the pulse motor drivers 61 and 62 to wind the rubber sheet 4 on the drum 4. When the number of pulses generated by the pulse generator 54 reaches $X_4$ (Figure 3(C)), the pulse motors 15 and 44 are stopped and the winding completion signal is produced to the sequence circuit unit 49. Thus, the sequence circuit unit 49 controls the cutter 33 through a circuit not shown to cut the rubber sheet 4. Then, the pulse generator 54 is operated for a predetermined time to drive only the pulse motor 15 through the frequency divider 55, the relay circuit unit 59 and the pulse motor driver 61. After the remaining portion of the rubber sheet 4 is wound, the feeding unit 6 is returned to the wait condition and the winding process is terminated.

In accordance with the specification of the V belt, further layers of the rubber sheet 5 may be wound by the same operation.

When all the winding process is terminated, the sequence circuit unit 49 produces the end signal to the data processor 48 and causes the data processor 48 to perform the next process, that is, the exchange of the drum and the like. In the data processor 48, the counter memory in the memory circuit is incremented by 1 to be (N+1).

Although the above description has been made to the V belt by way of example, the formation of the flat belt or the like can be made in the same manner if the formation includes the process of winding the unvulcanized rubber sheet on the drum.

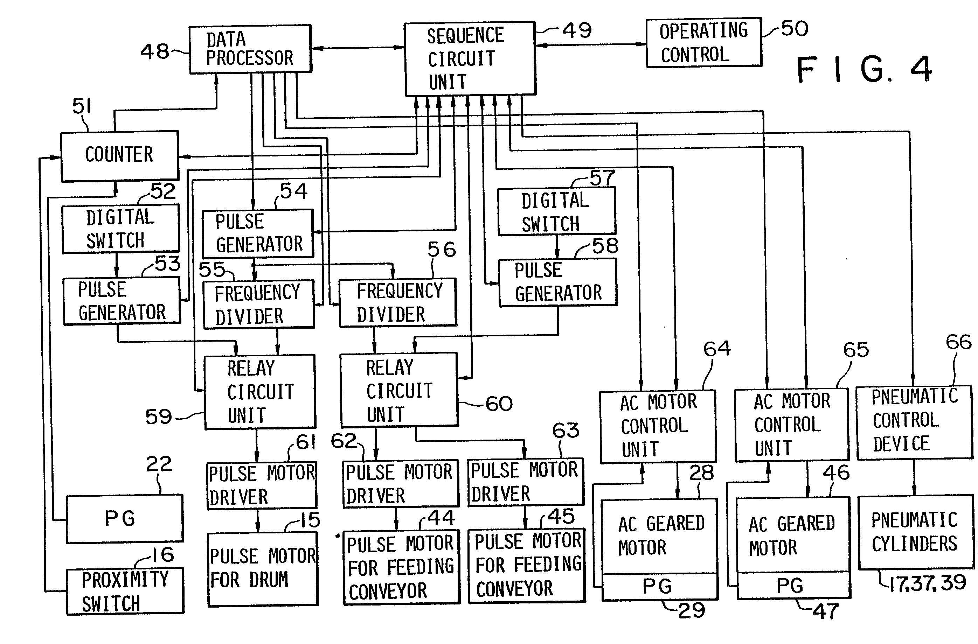

In the above embodiment, although only the pulse motor 15 is provided for rotating the drum 1, other equipments are provided in many cases and stitching and cutting operations are performed while rotating the drum 1. In such a case, it is advantageous in a cycle time that another motor is provided which is switched with the pulse motor 15 through a clutch to rotate the drum 1. In the case where the additional motor is switched through the clutch to rotate the drum 1 and the rotation of the drum 1 for measuring the peripheral length is made by the additional motor, the pulse generator 53 and the relay circuit unit 59 are removed in the circuit of Figure 4 and the frequency divider 55 may be directly coupled with the pulse motor driver 61.

Further, although the pulse motors are used to drive both the drum 1 and the conveyor for the feeding units 6 and 7, one of them may be a DC servomotor, a DC motor with PG, an AC motor with PG or a pulse motor and the other may be a DC servomotor. In such a case, while the circuit of Figure 4 is partly changed to be suitable for such a motor drive circuit, the variation is simple to those skilled in the art and the description will be omitted.

**Claims**

1. A controller for winding an unvulcanized rubber sheet (4 or 5) which comprises a cylindrical drum (1) rotated by a motor (15) for winding said unvulcanized rubber sheet, at least a feeding conveyor (6 or 7) driven by a motor (44 or 45) for feeding said unvulcanized rubber sheet to said drum, means (18, 19, 22) for measuring the outer peripheral length of said drum before winding said unvulcanized rubber sheet (including already wound rubber sheet), a data processor (48) for calculating the amount of winding rotation of said drum for winding said unvulcanized rubber sheet on said drum on the basis of previously input data and said measured outer peripheral length of said drum and also calculating, a dividing ratio for said drum and a dividing ratio for said conveyor respectively so as to synchronize the peripheral velocities of said drum and said feeding conveyor and to output said dividing ratios and a sequence control unit (49) for controlling the sequence of operation of each of the aforesaid motors to be driven on the basis of output of said data processor.

2. A controller for winding an unvulcanized rubber sheet, as claimed in Claim 1, wherein said output of calculated amount of winding rotation of said unvulcanized rubber sheet on said drum in said data

7

processor includes a compensation for the characteristics and overlapping width of said unvulcanized rubber sheet.

## Patentansprüche

1. Steuereinrichtung zum Aufwickeln eines unvulkanisierten Gummibandes (4 oder 5) mit einer zylindrischen Trommel (1), die von einem Motor (15) zum Aufwickeln dieses unvulkanisierten Gummibandes gedreht wird, wenigstens einem Zuführungsförderer (6 oder 7), der von einem Motor (44 oder 45) angetrieben wird, zum Zuführen dieses unvulkanisierten Gummibandes zu der Trommel, Mittel (18, 19, 22) zum Messen der äußeren Umfangslänge der Trommel vor dem Aufwickeln des unvulkanisierten Gummibandes (einschließlich bereits gewickeltem Gummibandes), einem Rechner (48) zum Berechnen der Umdrehungen der Trommel zum Aufwickeln des unvulkanisierten Gummibandes auf die Trommel auf der Basis der vorher eingegebenen Daten und der gemessenen äußeren Umfangslänge der Trommel und zum Berechnen eines Teilungsverhältnisses für die Trommel und eines Teilungsverhältnisses entsprechend für den Förderer, um so die Umdrehungsgeschwindigkeit der Trommel und des Zuführungsförderers zu synchronisieren und zur Ausgabe dieser Teilungsverhältnisse und eine Folgesteuereinheit (49) zur Steuerung der Arbeitsfolgen jedes der vorher erwähnten Motoren zum Antrieben auf der Basis der Ausgabe des Rechners.

2. Steuereinrichtung zum Aufwickeln eines unvulkanisierten Gummibandes nach Anspruch 1, wobei die Ausgabe der errechneten Umdrehungsanzahl des unvulkanisierten Gummibandes auf der Trommel in dem Rechner eine Kompensation der Charakteristiken und der Überlappungsbreite des unvulkanisierten Gummibandes einschließt.

## Revendications

1. Dispositif de commande pour enrouler une feuille de caoutchouc non vulcanisé (4 ou 5), comprenant un tambour cylindrique (1) entraîné en rotation par un moteur (15) pour enrouler ladite feuille de caoutchouc non vulcanisé, au moins un transporteur (6 ou 7) entraîné par un moteur (44 ou 45) pour amener ladite feuille de caoutchouc non vulcanisé audit tambour, des moyens (18, 19, 22) pour mesurer la longueur périphérique externe dudit tambour avant l'enroulement de ladite feuille de caoutchouc non vulcanisé (incluant la feuille de caoutchouc déjà enroulée), une unité de traitement d'informations (48) pour calculer la rotation dudit tambour pour enrouler ladite feuille de caoutchouc non vulcanisé sur ledit tambour sur la base de données précédemment entrées et de la ladite longueur périphérique externe mesurée dudit tambour, et calculer également un coefficient diviseur pour ledit tambour et un coefficient diviseur pour ledit transporteur, respectivement, de façon à synchroniser les vitesses périphériques dudit tambour et dudit transporteur et à sortir les coefficients, et une unité de commande de séquence (49) pour commander la séquence de fonctionnement de chacun desdits moteurs à entraîner sur la base de la sortie de ladite unité de traitement d'informations.

2. Dispositif de commande pour enrouler une feuille de caoutchouc non vulcanisé selon la revendication 1, dans lequel la rotation de ladite feuille de caoutchouc non vulcanisé sur ledit tambour, calculée dans ladite unité de traitement d'informations, est compensée pour tenir compte des caractéristiques et de la largeur de chevauchement de ladite feuille de caoutchouc non vulcanisé.

F I G. I

FIG. 2

FIG. 3(A)    FIG. 3(B)    FIG. 3(C)

# F I G. 4

Block diagram:

- 50 — OPERATING CONTROL
- 49 — SEQUENCE CIRCUIT UNIT
- 48 — DATA PROCESSOR
- 51 — COUNTER
- 52 — DIGITAL SWITCH
- 53 — PULSE GENERATOR
- 54 — PULSE GENERATOR
- 55 — FREQUENCY DIVIDER
- 56 — FREQUENCY DIVIDER
- 57 — DIGITAL SWITCH
- 58 — PULSE GENERATOR
- 59 — RELAY CIRCUIT UNIT
- 60 — RELAY CIRCUIT UNIT
- 61 — PULSE MOTOR DRIVER
- 62 — PULSE MOTOR DRIVER
- 63 — PULSE MOTOR DRIVER
- 15 — PULSE MOTOR FOR DRUM
- 44 — PULSE MOTOR FOR FEEDING CONVEYOR
- 45 — PULSE MOTOR FOR FEEDING CONVEYOR
- 64 — AC MOTOR CONTROL UNIT
- 65 — AC MOTOR CONTROL UNIT
- 28 — AC GEARED MOTOR
- 29 — PG
- 46 — AC GEARED MOTOR
- 47 — PG
- 66 — PNEUMATIC CONTROL DEVICE
- PNEUMATIC CYLINDERS 17, 37, 39
- 22 — PG
- 16 — PROXIMITY SWITCH